(19) **Europäisches Patentamt**

**European Patent Office**

**Office européen des brevets**

(11) **EP 1 061 349 B1**

(12) **FASCICULE DE BREVET EUROPEEN**

(45) Date de publication et mention
de la délivrance du brevet:
**15.09.2004 Bulletin 2004/38**

(51) Int Cl.⁷: **G01J 9/02**

(21) Numéro de dépôt: **00401638.2**

(22) Date de dépôt: **08.06.2000**

(54) **Interféromètre optique achromatique, du type à sensibilité continûment réglable**

Achromatisches optisches Interferometer mit kontinuierlich einstellbarer Empfindlichkeit

Achromatic optical interferometer with a continuously tuneable sensitivity

(84) Etats contractants désignés:
**DE FR GB**

(30) Priorité: **17.06.1999 FR 9907804**

(43) Date de publication de la demande:
**20.12.2000 Bulletin 2000/51**

(73) Titulaire: **ONERA (Office National d'Etudes et de Recherches Aérospatiales)**
**92320 Châtillon (FR)**

(72) Inventeurs:
• **Primot, Jérôme M.**
**92320 Châtillon (FR)**
• **Guerineau, Nicolas M.**
**92160 Antony (FR)**

(74) Mandataire: **Lapoux, Roland**
**Martinet & Lapoux**
**BP 405**
**78055 Saint Quentin en Yvelines Cédex (FR)**

(56) Documents cités:
**FR-A- 2 682 761** **FR-A- 2 712 978**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention est destinée à l'analyse de la surface d'onde d'un faisceau de lumière.

Ce type d'analyse permet le contrôle des éléments optiques, la qualification des appareils optiques, ainsi que le pilotage des éléments optiques déformables utilisés dans les optiques actives ou adaptatives. Il permet aussi l'étude de phénomènes physiques non directement mesurables, tels que les variations d'indice optique au sein de milieux turbulents que l'on peut rencontrer à la traversée de l'atmosphère terrestre, ou bien dans une veine de soufflerie. Il est aussi utilisé pour le contrôle de la planéité de composants électroniques, par exemple des plans focaux matriciels, ainsi que pour la mise en forme de faisceaux laser de puissance.

Le type d'analyse de surface d'onde selon l'invention est basé sur l'utilisation d'un réseau de diffraction positionné sur le trajet du faisceau à analyser.

Pour la bonne compréhension de ce qui va suivre, un tel réseau est défini comme étant un dispositif optique introduisant des variations périodiques de phase, d'intensité, ou de phase et d'intensité. Tout réseau est ainsi caractérisé par la multiplication de deux fonctions : l'une, appelée fonction de phase, traduit les variations périodiques de phase introduites par le réseau et l'autre appelée fonction d'intensité traduit les variations périodiques d'intensité introduites par le réseau.

Conformément à son brevet d'invention FR 2 712 978, le demandeur rappelle le mode de constitution et la définition d'un réseau bidimensionnel. Un ensemble de points disposés régulièrement suivant deux directions constitue un maillage plan. Ces points définissent une maille élémentaire. La maille élémentaire est la plus petite surface permettant de réaliser un pavage non lacunaire du plan selon les deux directions qui le définissent. Le polygone de la maille élémentaire est le polygone de surface minimale dont les côtés sont supportés par les médiatrices des segments reliant un point quelconque de l'ensemble à ses plus proches voisins. Un réseau bidimensionnel est la répétition à volonté d'un motif élémentaire disposé selon un maillage plan. Un maillage plan peut définir des mailles élémentaires hexagonales ou rectangulaires (les mailles carrées n'étant qu'un cas particulier de ces dernières).

Lorsqu'on éclaire un réseau de diffraction avec un faisceau de lumière, appelé faisceau incident, les faisceaux de lumière diffractés par le réseau, appelés faisceaux émergents, peuvent être décrits selon deux approches équivalentes.

La première approche consiste à considérer les faisceaux émergents comme des répliques du faisceau incident. Ils sont appelés sous-faisceaux, chacun correspondant à un ordre de diffraction du réseau.

La seconde approche consiste à considérer les faisceaux émergents comme des faisceaux diffractés par chaque maille du réseau. Ils sont appelés faisceaux secondaires.

Quand une fonction d'intensité est introduite par un réseau, chaque faisceau secondaire est issu d'une sous-pupille.

On connaît l'analyseur de "Hartmann-Shack", décrit dans "Phase measurements systems for adaptive optics", J.C. WYANT, AGARD Conf. Proc., N°300, 1981. Le principe général de fonctionnement consiste à conjuguer optiquement le défaut de phase à analyser avec un plan d'analyse dans lequel est placé une grille de micro-lentilles qui définit un réseau bidimensionnel composé d'une fonction de phase, chaque micro-lentille délimitant un faisceau secondaire. Dans le plan commun des foyers des micro-lentilles appelé plan d'observation, on observe un maillage bidimensionnel de taches déformé suivant les gradients de la surface d'onde. Pour les applications de pilotage d'optiques actives ou adaptatives, le maillage privilégié est rectangulaire. Ce qui précède relève d'une description classique de l'analyseur de Hartmann-Shack et s'appuie sur l'approche de décomposition en faisceaux secondaires. Une autre interprétation, basée sur une décomposition en sous-faisceaux diffractés par le réseau de micro-lentilles a été esquissée dans la publication "Variations on a Hartmann thème", F. Roddier, SPIE, TUXON 1990.

Ce type d'analyseur a l'avantage de fonctionner en lumière polychromatique, sous réserve que le défaut de différence de marche à détecter ne dépende pas de la longueur d'onde. Il est très simple de mise en oeuvre, constitué d'un seul élément optique et son rendement lumineux est très bon, par contre, sa sensibilité et sa dynamique ne sont réglables qu'en changeant la grille de micro-lentilles. Dans un mode d'analyse, dit sous-échantillonné, il permet aussi l'analyse de surface d'onde à partir de sources lumineuses de faible intensité. Ce mode d'analyse utilise un petit nombre de micro-lentilles, quelle que soit la surface d'onde à mesurer, afin de concentrer le faible flux utile en quelques points de mesure du gradient de la surface d'onde.

Dans son brevet d'invention FR 2 712 978 déjà mentionné, le demandeur a décrit un interféromètre à décalage tri-latéral mettant en oeuvre un réseau bidimensionnel de phase et/ou d'intensité et un système de filtrage spatial. D'après l'approche par décomposition en sous-faisceaux, le réseau subdivise optiquement, dans un plan conjugué du défaut, le faisceau incident à analyser en trois sous-faisceaux. Un traitement optique particulier des trois sous-faisceaux ainsi obtenus permet d'observer un interférogramme constitué par un maillage hexagonal de taches lumineuses dont le contraste est invariant, quel que soit le plan d'observation retenu. Cet interférogramme est sensible aux gradients de la surface d'onde, et ce avec une possibilité d'ajustement continu de la dynamique et de la sensibilité. La distance d'observation y est définie comme la distance séparant le plan d'observation retenu du plan dit de sensibilité nulle, ce dernier étant un plan conjugué du plan du réseau situé en aval du filtrage spatial. Dans l'article "Achromatic Three-Wave (or more) Lateral Shearing Interferometer" Journal of Optical Society of America A, volume 12, N°12, decembre 1995, le demandeur a esquissé une modification de cet interféromètre vers un interféromètre à décalage quadri-latéral pour lequel le maillage bidimensionnel des taches lumineuses observées dans l'interférogramme est rectangulaire et est donc mieux adapté pour les applications de pilotage d'optiques actives ou adaptatives.

Ce type d'analyseur est achromatique et son rendement lumineux est proche de celui du Hartmann-Shack. Par contre, il est plus complexe de mise en oeuvre, du fait de l'insertion du système de filtrage spatial pour sélectionner les sous-faisceaux entre le réseau et le plan d'observation du système de franges d'interférence. De plus, le système de filtrage spatial apporte des limitations pour la mesure de faisceaux lumineux fortement perturbés ou de très grande largeur spectrale. Ainsi, il ne permet pas le mode d'analyse sous-échantillonné évoqué pour l'analyseur de Hartmann-Shack.

Il paraît donc vivement souhaitable de disposer d'un interféromètre combinant à la fois la simplicité de mise en oeuvre et la capacité de fonctionnement, à partir de sources lumineuses de faible intensité fortement perturbées ou de très grande largeur spectrale, de l'analyseur de Hartmann-Shack et la souplesse de réglage en dynamique de l'interféromètre à décalage tri-latéral du brevet d'invention FR 2 712 978 ou de l'interféromètre à décalage quadri-latéral esquissé dans l'article "Achromatic Three-Wave (or more) Lateral Shearing Interferometer".

La présente invention a pour but d'apporter un progrès en ce sens.

L'invention peut être considérée sous forme de procédé ou de dispositif.

Le procédé proposé est du type dans lequel :

a) on place un réseau bidimensionnel à maillage rectangulaire dans ou au voisinage d'un plan perpendiculaire au faisceau de lumière à analyser, et optiquement conjugué du plan d'analyse de la surface d'onde, ce qui provoque une diffraction du faisceau en différents faisceaux émergents, et

b) on crée et on observe dans un plan une image formée par l'interférence des faisceaux émergents, image dont les déformations sont liées aux gradients de la surface d'onde analysée.

Selon un aspect de l'invention, l'opération a) comprend la multiplication d'

a1) une fonction d'intensité qui définit un maillage rectangulaire de sous-pupilles transmettant la lumière du faisceau à analyser en un maillage rectangulaire de faisceaux secondaires avec,

a2) une fonction de phase qui introduit, entre deux faisceaux secondaires adjacents, un déphasage tel que ces deux faisceaux secondaires soient en opposition de phase.

Par opposition de phase il faut comprendre aussi des déphasages sensiblement voisins de l'opposition de phase absolue.

Ce grâce à quoi le réseau de diffraction réalisant la multiplication des deux fonctions ainsi définies diffracte un maillage rectangulaire de faisceaux secondaires qui se propagent et interfèrent entre eux de manière à générer, en tout plan d'observation parallèle au plan du réseau, une image se présentant sous la forme d'un maillage rectangulaire de taches lumineuses dont le contraste est sensiblement indépendant de la longueur d'onde ainsi que de la distance d'observation.

Le maillage rectangulaire de taches lumineuses est observable dans le plan du réseau, plan de sensibilité nulle. Le maillage est avantageusement observé dans un plan situé à une distance d'observation choisie par l'utilisateur en fonction des gradients de la surface d'onde à analyser et de la dynamique désirée.

Ce procédé fonctionne en lumière polychromatique et, en ajustant la distance d'observation, permet, par un réglage continu de la sensibilité et de la dynamique de l'appareil, la mesure de faisceaux lumineux fortement perturbés.

L'utilisateur dispose ainsi de la souplesse de réglage continu en dynamique de l'interféromètre à décalage quadri-latéral sans les contraintes de mise en oeuvre liées à l'insertion du système de filtrage spatial.

L'invention couvre également les dispositifs susceptibles de permettre la mise en oeuvre du procédé proposé. Un tel dispositif est du type comprenant :

α) une optique d'entrée, conjuguant un plan de référence avec le plan dans lequel est analysée la surface d'onde,

β) un réseau bidimensionnel à maillage rectangulaire, placé dans ce plan de référence, perpendiculairement au faisceau, ce qui provoque une diffraction du faisceau en différents faisceaux émergents, et

γ) des moyens d'observation de l'image formée par l'interférence des faisceaux émergents, image dont les déformations sont liées au gradient de la surface d'onde analysée.

Selon l'invention, le dispositif est caractérisé en ce que le réseau de β) comprend

- un réseau d'intensité ayant une maille élémentaire d'intensité de longueur L selon la première direction du maillage et de largeur l selon la deuxième direction du maillage, maille où est disposé un motif élémentaire d'intensité, et

**-** un réseau de phase ayant une maille élémentaire de phase de longueur 2L selon la première direction du maillage et de largeur 21 selon la deuxième direction du maillage, maille où est disposé un motif élémentaire de phase,

les côtés des mailles du réseau de phase étant en coïncidence avec ceux des mailles du réseau d'intensité, le motif élémentaire de phase étant tel qu'il introduit un déphasage voisin de $\pi$ (modulo $2\pi$) entre deux faisceaux secondaires traversant deux motifs élémentaires d'intensité adjacents.

Un réseau bidimensionnel d'intensité préférentiel selon l'invention a un motif élémentaire d'intensité rectangulaire dont la surface est voisine de 50% de la surface de la maille élémentaire d'intensité.

Un réseau bidimensionnel de phase préférentiel selon l'invention, réalisé dans un matériau ayant une certaine épaisseur et un indice de transmission, a un motif élémentaire de phase en damier à quatre cases, chaque case du damier ayant la longueur L et la largeur 1 de la maille élémentaire d'intensité, deux cases adjacentes présentant des épaisseurs différentes réalisant par variation d'indice la fonction de phase définie.

D'autres caractéristiques et avantages de l'invention apparaîtront à l'examen de la description détaillée ci-après et des dessins annexés, sur lesquels :

**-** la figure 1A est le schéma optique de principe d'un dispositif permettant la mise en oeuvre de l'invention pour le contrôle d'éléments optiques ;

**-** la figure 1B est le schéma optique de principe d'un dispositif permettant la mise en oeuvre de l'invention pour la mesure de milieux turbulents comme l'atmosphère terrestre que traverse un faisceau issu d'une source polychromatique comme une étoile ;

**-** la figure 2 illustre un réseau bidimensionnel à maillage rectangulaire ;

**-** la figure 3A illustre un exemple de réseau d'intensité à maillage rectangulaire utilisable dans l'invention ;

**-** la figure 3B illustre un exemple de réseau d'intensité à maillage carré utilisable dans l'invention ;

**-** la figure 4 illustre un exemple de réseau de phase à maillage rectangulaire utilisable dans l'invention.

**-** la figure 5 illustre un exemple de réseau à maillage rectangulaire conforme à l'invention.

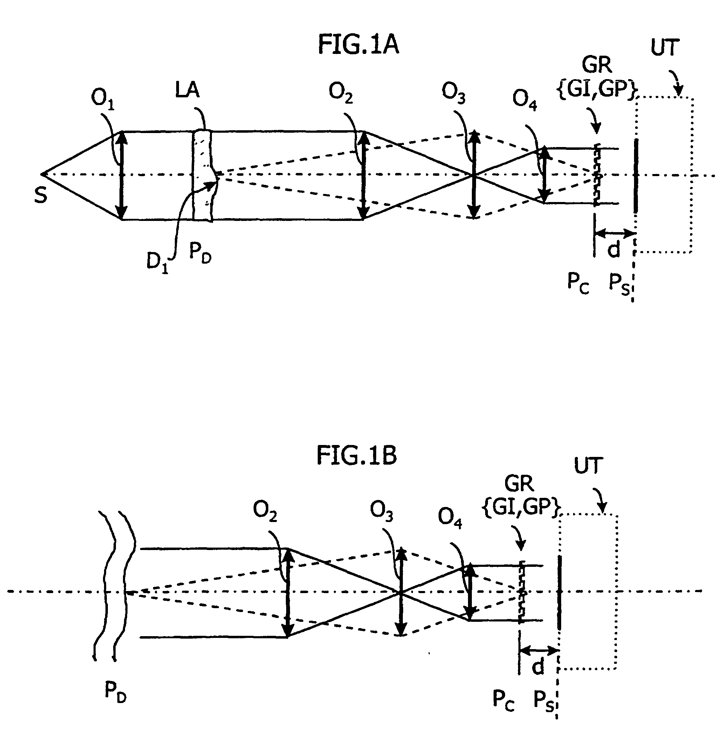

Les figures 1 présentent deux exemples de dispositifs permettant la mise en oeuvre de l'invention.

Sur la figure 1A, une source S de lumière polychromatique est placée au foyer d'une lentille collimatrice $O_1$. Le faisceau de lumière parallèle issu de la lentille $O_1$ illumine un échantillon à tester, qui est représenté schématiquement comme une lame à faces parallèles LA, placé dans le plan $P_D$, et présentant un défaut de planéité $D_1$. L'échantillon peut être tout autre système optique (une lentille ou un miroir, en particulier un miroir de télescope), ou même simplement une zone d'un milieu gazeux qui serait perturbé par un écoulement par exemple.

Dans le cas d'une application en astronomie, un dispositif permettant de mettre en oeuvre l'invention est illustré par la figure 1B. Une onde plane issue d'une source très éloignée comme une étoile par exemple traverse un milieu turbulent dont les variations d'indice sont représentées par des traits sinueux.

Un montage d'entrée réalise l'adaptation optique permettant de mettre en oeuvre le procédé selon l'invention.

Cette adaptation est réalisée de préférence par un système afocal constitué de deux lentilles $O_2$ et $O_4$, avec en position intermédiaire une lentille de champ $O_3$. Ce système afocal a pour fonction d'une part, d'adapter le diamètre du faisceau, analysé dans le plan $P_D$, aux dimensions du réseau bidimensionnel situé dans un plan $P_C$, et, d'autre part, de conjuguer optiquement le plan $P_D$ où se situe le défaut à analyser avec le plan $P_C$.

D'autres moyens réalisant cette conjugaison optique entre ces deux plans peuvent convenir.

Dans le plan d'analyse $P_C$, on place un réseau bidimensionnel GR apte à réaliser la combinaison des fonctions d'intensité et de phase. Matériellement, ce réseau peut être constitué, comme par exemple celui de la figure 5, de deux réseaux GI3A, GP4, ou plus. C'est la combinaison particulière des fonctions qui caractérise le réseau de l'invention et non un mode de réalisation particulier.

Dans l'exemple de réalisation présenté, le réseau GR est constitué d'un réseau d'intensité GI et un réseau de phase GP.

Le réseau d'intensité GI réalise une fonction d'intensité FI qui définit un maillage rectangulaire de sous-pupilles transmettant la lumière du faisceau à analyser en plusieurs faisceaux secondaires.

Le réseau de phase GP réalise une fonction de phase FP qui introduit, entre deux faisceaux secondaires adjacents, un déphasage moyen voisin de $\pi$ (modulo $2\pi$).

L'ordre dans lequel sont réalisées ces deux fonctions dans le plan est sans importance.

Selon l'invention, l'interférogramme est constitué par un maillage rectangulaire de taches.

Le plan $P_C$ est un plan de sensibilité nulle.

L'observation est effectuée dans un plan $P_S$, situé à distance d'observation choisie d du plan $P_C$.

La dynamique et la sensibilité du dispositif varient selon la distance d'observation. Ainsi, lorsque d est nulle, le plan d'observation est confondu avec le plan d'analyse $P_C$ où est situé le réseau et la sensibilité est nulle.

En général, un moyen complémentaire d'observation du plan $P_S$, constitué par exemple d'une lentille qui réalise une conjugaison optique entre le plan $P_S$ et un plan de travail plus accessible peut être utilisé.

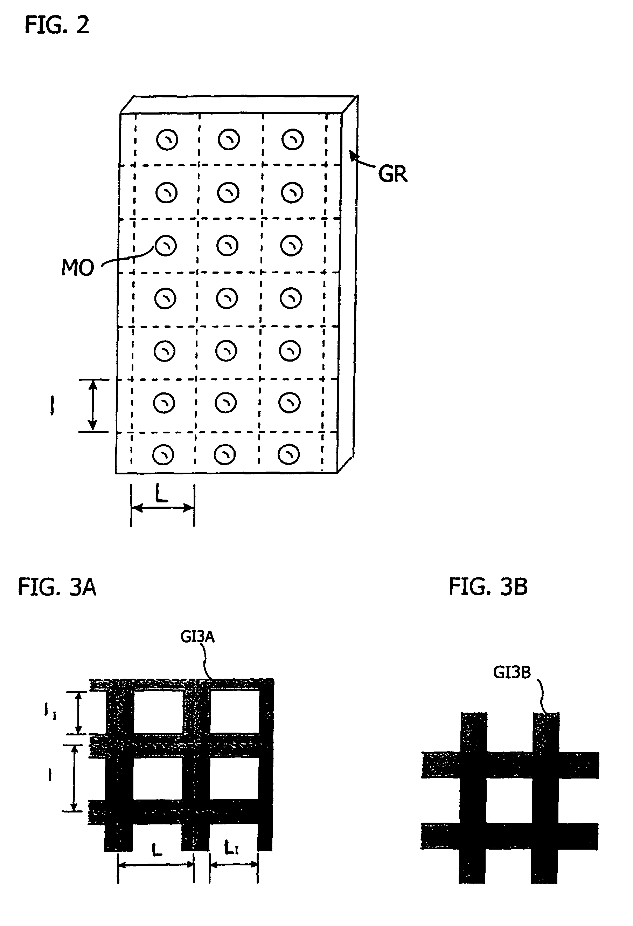

La figure 2 montre un réseau bidimensionnel GR à maillage rectangulaire caractérisé par une maille élémentaire rectangulaire longueur L et de largeur l. Le maillage, représenté en traits interrompus, n'est pas nécessairement visible dans le réseau final. Dans chaque maille, un motif MO est représenté qui introduit des variations d'intensité, de phase, ou d'intensité et de phase au faisceau lumineux incident.

Les figures 3 montrent des réseaux bidimensionnels d'intensité GI qui offrent un moyen simple de réaliser la fonction d'intensité selon le procédé d'invention. La figure 3A illustre un réseau GI3A du type de Ronchi croisé à maillage rectangulaire de longueur L et de largeur l. Les zones grisées sont de transmission nulle et les zones claires peuvent être soit transparentes, soit réfléchissantes. Ces zones claires constituent les sous-pupilles. De manière privilégiée, les cotés $L_l$ et $l_l$ de ces zones claires sont respectivement voisins de 2L/3 et 2l/3. Ainsi, la surface de la sous-pupille est proche de la moitié de la surface de la maille élémentaire. La figure 3B illustre un réseau GI3B du type de Ronchi croisé à maille carrée de coté L, qui selon l'opinion du Demandeur est le mode d'utilisation de l'invention le plus avantageux.

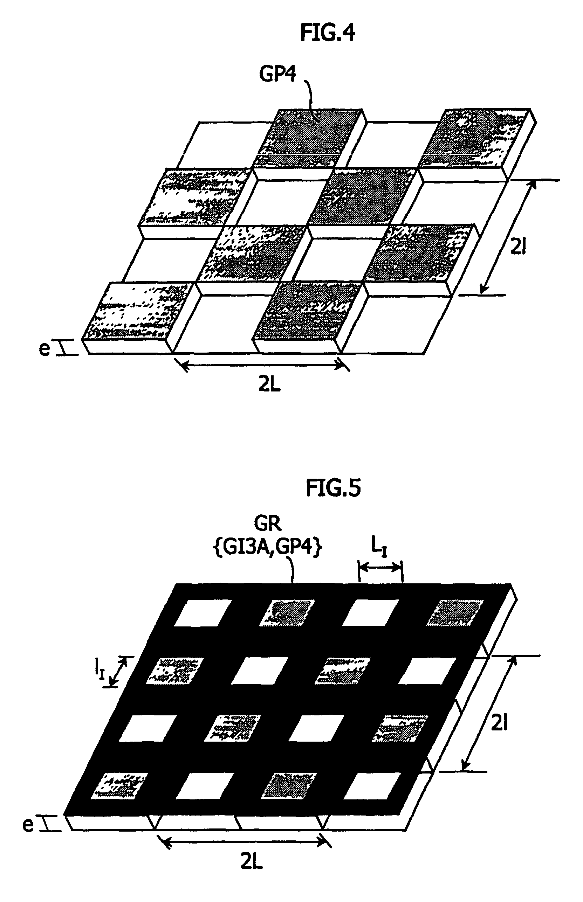

La figure 4 montre en perspective un exemple de réseau bidimensionnel de phase GP qui offre un moyen simple de réaliser la fonction de phase selon le procédé d'invention. La figure 4 illustre un réseau GP4 du type damier à maillage rectangulaire de cotés 2L et 2l. Le réseau GP4 présente des variations périodiques d'épaisseur par palier, de manière à ce que l'écart d'épaisseur e entre paliers adjacents suive la relation :

$$e = \lambda/n * (k+\tfrac{1}{2}),$$

où $\lambda$ est la longueur d'onde moyenne d'utilisation, n est

- l'indice de réfraction du matériau dans le cas d'une utilisation du réseau de phase en transmission ou
- le double de l'indice de réfraction du milieu de transmission dans le cas d'une utilisation du réseau de phase en réflexion,

et k est un entier.

Les surfaces grisées du réseau GP4 peuvent être soit transparentes pour un réseau utilisé en transmission soit réfléchissantes pour un réseau utilisé en réflexion.

Un moyen avantageux pour la réalisation des réseaux GI et GP est d'utiliser les techniques de masquage et de gravure par photolithographie qui sont largement employées dans l'industrie des semiconducteurs ; GI peut ainsi être réalisé par dépôt d'un masque métallique sur une lame de substrat et GP par gravure d'une lame de substrat. Avec ces techniques, il est possible de réaliser avec une seule lame de substrat un réseau bidimensionnel de phase et d'intensité qui combine les deux fonctions FI et FP de respectivement GI et GP.

D'autres procédés de réalisation des deux fonctions FI et FP par des réseaux GI et GP peuvent être envisagés basés, par exemple, sur le principe d'enregistrement sur des plaques photosensibles d'interférogrammes pour ainsi aboutir à la réalisation de réseaux holographiques.

La combinaison des réseaux GI et GP permet de générer un maillage de taches lumineuses dont le contraste est sensiblement indépendant de la distance d'observation d et de la longueur d'onde d'utilisation. Du fait des brusques variations d'intensité introduites par le réseau d'intensité GI du type de Ronchi, des fluctuations de contrastes apparaissent au cours de la propagation qui se traduisent par des déformations locales hautes fréquences des taches lumineuses. Ces déformations parasites restent mineures par rapport à la modulation sinusoïdale d'intensité observée dans les deux directions et ne perturbent pas l'analyse de la surface d'onde.

Dans la demande de brevet FR 2 682 761, le demandeur a proposé une technique d'analyse des images d'interférence obtenues, afin d'accéder aux gradients de la surface d'onde. Ces techniques sont directement applicables aux maillages de taches lumineuses obtenus selon la présente invention.

La grille des déformations du maillage de taches lumineuses peut aussi être obtenue à partir d'un calcul de la position des barycentres des taches lumineuses. Cette technique couramment employée dans le cas d'un analyseur de type Hartmann-Shack est directement applicable aux maillages rectangulaires de taches lumineuses obtenus selon la présente invention.

**Revendications**

**1.** Procédé pour l'analyse de surface d'onde d'un faisceau de lumière, dans lequel :

a) on place un réseau bidimensionnel à maillage rectangulaire dans un plan ($P_C$) perpendiculaire au faisceau de lumière à analyser et optiquement conjugué du plan ($P_D$) d'analyse de la surface d'onde, ce qui provoque une diffraction du faisceau en différents faisceaux émergents, et

b) on crée et on observe dans un plan ($P_S$) situé à distance choisie du plan ($P_C$) une image formée par l'interférence des faisceaux émergents, image dont les déformations sont liées aux gradients de la surface d'onde analysée,

**caractérisé en ce que** l'opération a) comprend la multiplication d'

a1) une fonction d'intensité (FI) qui définit un maillage rectangulaire de sous-pupilles transmettant la lumière du faisceau à analyser en plusieurs faisceaux secondaires disposés suivant un maillage rectangulaire avec,

a2) une fonction de phase (FP) qui introduit, entre deux faisceaux secondaires adjacents, un déphasage tel que ces deux faisceaux secondaires soient en opposition de phase.

2. Procédé selon la revendication 1, **caractérisé en ce qu'**à l'opération a1) la fonction (FI) définit un maillage de sous-pupilles dont la surface est proche de la moitié de la surface de la maille élémentaire du maillage rectangulaire.

3. Procédé selon l'une des revendications 1 et 2, **caractérisé en ce que** le maillage défini par la fonction (FI) est carré.

4. Dispositif pour l'analyse de la surface d'onde d'un faisceau de lumière, comprenant :

$\alpha$) une optique d'entrée ($O_2$, $O_3$, $O_4$), conjuguant optiquement un plan de référence ($P_C$) avec le plan ($P_D$) dans lequel est analysée la surface d'onde,

$\beta$) un réseau bidimensionnel à maillage rectangulaire (GR), placé dans le plan de référence ($P_C$), ce qui provoque une diffraction du faisceau en différents faisceaux émergents, et

$\gamma$) des moyens d'observation de l'image formée par l'interférence des faisceaux émergents, image dont les déformations sont liées au gradient de la surface d'onde analysée,

**caractérisé en ce que** le réseau de $\beta$) comprend

- un réseau d'intensité (GI) ayant une maille élémentaire d'intensité de longueur L selon la première direction du maillage et de largeur 1 selon la deuxième direction du maillage, maille où est disposé un motif élémentaire d'intensité, et

- un réseau de phase (GP) ayant une maille élémentaire de phase de longueur 2L selon la première direction du maillage et de largeur 2l selon la deuxième direction du maillage, maille où est disposé un motif élémentaire de phase,

les côtés des mailles (2L, 2l) du réseau de phase étant en coïncidence avec ceux des mailles du réseau d'intensité,
le motif élémentaire de phase étant tel qu'il introduit un déphasage voisin de $\pi$ (modulo $2\pi$) entre deux faisceaux secondaires traversant deux motifs élémentaires d'intensité adjacents.

5. Dispositif selon la revendication 4, **caractérisé en ce que** le réseau (GI) est du type Ronchi croisé rectangulaire.

6. Dispositif selon l'une des revendications 4 ou 5, **caractérisé en ce que** le réseau (GP) est du type damier à deux niveaux d'épaisseur.

7. Dispositif selon l'une des revendications 4 à 6, **caractérisé en ce que** le réseau (GR) fonctionne en transmission.

8. Dispositif selon l'une des revendications 4 à 6, **caractérisé en ce que** le réseau (GR) fonctionne en réflexion.

**Patentansprüche**

1. Verfahren zur Analyse der Wellenfront eines Lichtstrahls, bei dem:

a) ein zweidimensionales Gitter mit rechteckigem Gitternetz in einer Ebene ($P_C$) senkrecht zu dem zu analysierenden Lichtstrahl und optisch einer Analyseebene ($P_D$) der Wellenfront zugeordnet angeordnet wird, wodurch eine Beugung des Lichtstrahls in verschiedene ausfallende Strahlen verursacht wird, und

b) in einer Ebene ($P_S$), die in einem gewählten Abstand zur Ebene ($P_C$) liegt, ein Bild erzeugt und betrachtet wird, das durch Interferenz der ausfallenden Lichtstrahlen gebildet wird und dessen Verzerrungen in Zusammenhang mit den Gradienten der analysierten Wellenfront stehen,

**dadurch gekennzeichnet, dass** der Vorgang a) Folgendes beinhaltet: die Vervielfachung

a1) einer Intensitätsfunktion (FI), die ein rechteckiges Gitternetz von Unter-Pupillen definiert, die das Licht des zu analysierenden Strahls in mehrere Sekundärstrahlen übertragen, die entsprechend einem rechtekkigen Gitternetz angeordnet sind, mit

a2) einer Phasenfunktion (FP), die zwischen zwei aneinander grenzenden Sekundärstrahlen eine Phasenverschiebung verursacht, so dass diese beiden Sekundärstrahlen Gegenphasen aufweisen.

**2.** Verfahren gemäß Anspruch 1, **dadurch gekennzeichnet, dass** die Funktion (FI) in Vorgang a1) ein Gitternetz von Unter-Pupillen definiert, dessen Fläche fast die Hälfte der Fläche der Gitterzelle des rechteckigen Gitternetzes beträgt.

**3.** Verfahren gemäß Anspruch 1 und 2, **dadurch gekennzeichnet, dass** das von der Funktion (FI) definierte Gitternetz quadratisch ist.

**4.** Vorrichtung zur Analyse der Wellenfront eines Lichtstrahls, bestehend aus:

α) einer Eingangsoptik (O$_2$, O$_3$, O$_4$), die eine optische Zuordnung zwischen einer Referenzebene (P$_C$) und der Ebene (P$_D$) herstellt, in der die Wellenfront analysiert wird,

β) einem zweidimensionalen Gitter mit rechteckigem Gitternetz (GR), das in der Referenzebene (P$_C$) angeordnet ist, was eine Beugung des Lichtstrahls in verschiedene ausfallende Strahlen verursacht, und

γ) Mittel zur Betrachtung des durch Interferenz der ausfallenden Lichtstrahlen entstandenen Bildes, dessen Verzerrungen mit dem Gradienten der analysierten Wellenfront zusammenhängen,

**dadurch gekennzeichnet, dass** das Gitter aus β) Folgendes umfasst:

- ein Intensitätsgitter (GI) mit einer Intensitäts-Gitterzelle der Länge L in der ersten Gitternetzrichtung und der Breite 1 in der zweiten Gitternetzrichtung, wobei in der Zelle ein elementares Intensitätsmuster angeordnet ist, und

- ein Phasengitter (GP) mit einer Phasen-Gitterzelle der Länge 2L in der ersten Gitternetzrichtung und der Breite 21 in der zweiten Gitternetzrichtung, wobei in der Zelle ein elementares Phasenmüster angeordnet ist,

die Kanten der Zellen (2L, 21) des Phasengitters fallen dabei mit den Zellen des Intensitätsgitters zusammen,
das elementare Phasenmuster ist derart ausgeführt, dass es eine an n (Modulo 2n) grenzende Phasenverschiebung zwischen zwei Sekundärstrahlen verursacht, die zwei aneinander grenzende elementare Intensitätsmuster durchqueren.

**5.** Vorrichtung gemäß Anspruch 4, **dadurch gekennzeichnet, dass** es sich bei dem Gitter (GI) um ein rechteckig gekreuztes Ronchi-Gitter handelt.

**6.** Vorrichtung gemäß einem der Ansprüche 4 oder 5, **dadurch gekennzeichnet, dass** es sich bei dem Gitter (GP) um ein Schachbrett-Gitter mit zwei Stärkestufen handelt.

**7.** Vorrichtung gemäß einem der Ansprüche 4 bis 6, **dadurch gekennzeichnet, dass** das Gitter (GR) mit Übertragung arbeitet.

**8.** Vorrichtung gemäß einem der Ansprüche 4 bis 6, **dadurch gekennzeichnet, dass** das Gitter (GR

**Claims**

**1.** A method of analyzing the wavefront of a light beam, wherein :

a) a two-dimensional diffraction grating with rectangular meshing is placed in a plane (P$_C$) which is perpendicular to the light beam to be analyzed, and which is optically conjugated with a plane (P$_D$) of analysis of the wavefront, thereby making a beam to diffract into different beams emergent, and

b) an image formed by interference between the emergent beams is created and observed in a plane (P$_S$) situated from a selected distance of the plane (P$_C$), the deformations in the image being related to the slopes of the analyzed wavefront.

**characterized in that** the step a) comprises the multiplication of

a1) an intensity function (FI) which defines a rectangular meshing of sub-pupils transmitting the light from the light beam to be analyzed to form a plurality of secondary beams disposed in accordance with the rectangular meshing with,

a2) a phase function (FP) which introduces a phase shift between two adjacent secondary beams such that the two adjacent secondary beams are in phase opposition.

**2.** A method according to the claim 1, **characterized in that** at the operation a1) the function (FI) defines a meshing of sub-pupils the area of which is near to half the area of the elementary mesh of the rectangular meshing.

**3.** A method according to one of the claims 1 and 2, **characterized in that** the meshing defined by the function (FI) is a square meshing.

**4.** A system for analyzing the wavefront of a light beam, comprising :

α) an input optics ($O_2$, $O_3$, $O_4$), conjugating a reference plane ($P_C$) with the plane ($P_D$) in which the wavefront is analyzed,

β) a two-dimensional diffraction grating with rectangular meshing (GR),placed in the reference plane ($P_C$), which causes a diffraction of the beam into different emergent beams, and

γ) means for observing an image formed by interference between the emergent beams, deformations in the image being related to the slope of the analyzed wavefront,

**characterized in that** the β) grating comprises

- an intensity grating (GI) having an elementary intensity mesh in which an elementary intensity pattern is disposed and which is of length L in the first direction of the meshing and of width 1 in the second direction of the meshing, and

- a phase grating (GP) having an elementary phase mesh in which an elementary phase pattern is disposed and which is of length 2L in the first direction of the meshing and of width 21 in the second direction of the meshing,

the sides of the meshes (2L, 21) of the phase grating coinciding with sides of the meshes of the intensity grating,
the elementary phase pattern introducing a phase shift close to π (modulo 2π) between two secondary beams passing through two adjacent elementary intensity patterns.

**5.** A system according to the claim 4, **characterized in that** the grating (GI) is of the rectangular crossed Ronchi type.

**6.** A system according to any one of claims 4 or 5, **characterized in that** the grating (GP) is of the checkerboard type with two levels of thickness.

**7.** A system according to any one of claims 4 to 6, **characterized in that** the grating (GR) operates in transmission mode.

**8.** A system according to any one of claims 4 to 6, **characterized in that** the grating (GR) operates in reflection mode.

## FIG.1A

## FIG.1B

## FIG. 2

## FIG. 3A

## FIG. 3B

# FIG.4

GP4

$2l$

$e$

$2L$

# FIG.5

GR
{GI3A,GP4}

$L_I$

$l_I$

$2l$

$e$

$2L$